# EUROPÄISCHE PATENTSCHRIFT

(11) **EP 2 172 718 B1**
(45) Veröffentlichungstag und Bekanntmachung des Hinweises auf die Patenterteilung: **26.11.2014**
(21) Anmeldenummer: 09171230.7
(22) Anmeldetag: 24.09.2009
(51) Int. Cl.: F24J 2/40, F24J 2/04, F24D 19/10

(54) **Verfahren zur Verlängerung der Standzeit eines Solarkollektors und Solarkollektor**
Method for extending the working life of a solar collector and solar collector
Procédé de prolongation de la durée de vie d'un collecteur solaire et collecteur solaire

(30) Priorität: 04.10.2008 DE 102008050479
(43) Veröffentlichungstag der Anmeldung: 07.04.2010
(73) Patentinhaber: Robert Bosch GmbH, 70469 Stuttgart (DE)
(72) Erfinder: Lueke, Wolfgang, 48282, Emsdetten (DE); Arndt, Michael, 35396, Giessen (DE); Kosok, Juergen, 48565, Steinfurt (DE); Eisen, Thomas, 48493, Wettringen (DE); Hoetzel, Juergen, 61197, Florstadt (DE); Schulte, Uwe, 20144, Hamburg (DE); Oomen, Ronald, 7424, EP Deventer (NL); Helzel, Stefan, 35232, Dautphetal (DE); Warzecha, Andreas, 35460, Staufenberg (DE)

(56) Entgegenhaltungen:
- DE-A1- 19 647 216
- JP-A- S58 173 337
- US-A1- 2008 216 823

## Beschreibung

Die Erfindung betrifft ein Verfahren zur optimierten Wartung eines Solarsystems mit Solarfluid in einem Kreislauf über mindestens einen Solarkollektor, insbesondere zur Verlängerung der Standzeit eines Solarkollektors nach dem Oberbegriff des Patentanspruches 1. Weiter betrifft die Erfindung eine Vorrichtung zur optimierten Wartung eines Solarsystems mit Solarfluid in einem Kreislauf über mindestens einen Solarkollektor, insbesondere zur Verlängerung der Standzeit eines Solarkollektors nach dem Oberbegriff des Anspruchs 9.

Solaranlagen für die Erwärmung von Trink- oder Brauchwasser sowie die Heizungsunterstützung bestehen im Wesentlichen aus mindestens einem Sonnenkollektor, einem Solarkreislauf mit einer Pumpe zur Förderung eines Wärmeträgermediums, einem Regelgerät und einem Warmwasserspeicher mit einem integrierten Wärmetauscher zur Übertragung der Wärme aus dem Solarkreislauf an den Wasserinhalt.

Mit einem Temperaturfühler wird die Temperatur des Wärmeträgermediums am Vorlauf des mindestens einen Sonnenkollektors erfasst. Dabei ist es allgemein üblich, dass die Pumpe im Solarkreislauf bei Temperaturen über etwa 120 °C am Vorlauf des Sonnenkollektors nicht mehr anläuft und/oder aus dem Normalbetrieb der Regelung herausgenommen wird. Es liegt dann die sogenannte Stagnation vor. Die Pumpenabschaltung dient als Überhitzungsschutz für die Anlage, zum Beispiel um zu hohe Temperaturen im Warmwasserspeicher, die möglicherweise eine verstärkte Kalkbildung nach sich ziehen, zu vermeiden.

Aber auch die Solarkollektoren unterliegen aufgrund der intensiven Sonneneinstrahlung hohen Belastungen, besonders im oder nahe dem Stagnationsfall. Solche Abschaltungen der Solaranlage durch Überhitzungen können beispielsweise verursacht werden, wenn in den Warmwasserspeicher wegen zu hoher Temperaturen keine Solarwärme mehr eingebracht werden kann, und sich in den Sonnenkollektoren Dampf bildet. Die Pumpe im Solarkreislauf bleibt gesperrt, weil es zu schädlichen Dampfschlägen im Bereich der Sonnenkollektoren und Rohrleitungen kommen würde, wenn mit normaler Fördermenge der Pumpenbetrieb aus einem derartigen Überhitzungszustand wieder anlaufen würde.

Weiterhin wird ein Solarfluid, welches den Solarkollektor bzw. den Kreislauf im Solarsystem durchströmt, erhöhten Temperaturbelastungen ausgesetzt, welche einen Verschleiß bewirken. Ein derartiger Verschleiß bei einem Solarfluid wird auch durch den Begriff "Stress" beschrieben. Dabei kommt es zum sogenannten Cracken innerhalb des meistens verwendeten Glycol-Wasser-Gemisches, wobei beispielsweise die Frostschutzeigenschaften schlechter werden. Im Stand der Technik gibt es verschiedene Lösungen, Stressbereiche für ein Solarfluid zu vermeiden. Jedoch lassen sich Stressbereiche nicht vollständig vermeiden, weil diese von verschiedenen Nutzungs-, Auslegungs-, Komponenten- und Betriebseinflüssen abhängen. Daher lässt sich der genaue Zeitpunkt einer notwendigen Wartung bisher nicht genau für die jeweilige Anlage vorhersagen.

Bei einer Wartung des Solarfluides werden beispielsweise dessen pH-Wert überprüft und die Frostschutzeigenschaften mit einem Refraktometer bestimmt. Abhängig von der Messung oder auch routinemäßig wird dann eventuell das Solarfluid ausgetauscht.

Die JPS58173337A offenbart ein Verfahren, bei dem mittels eines Sensors der Zustand eines Solarfluids in einem Kollektorkreislauf ermittelt wird. Falls nun die Qualität des Fluids einen gewissen Grenzwert unterschreitet, werden sowohl ein optisches als auch ein akustisches Alarmsignal ausgegeben.

Der Erfindung liegt die Aufgabe zugrunde, die optimale Funktion eines Solarsystems über die Qualität des Solarfluids sicherzustellen.

Erfindungsgemäß wird dies durch die Gegenstände mit den Merkmalen des Patentanspruches 1 und des Patentanspruchs 9 gelöst. Vorteilhafte Weiterbildungen sind den Unteransprüchen zu entnehmen.

Das erfindungsgemäße Verfahren zur optimierten Wartung eines Solarsystems mit Solarfluid in einem Kreislauf über mindestens einen Solarkollektor, insbesondere zur Verlängerung der Standzeit eines Solarkollektors, wobei ein Zustand eines Solarfluids bewertet wird und eine Wartungsmeldung in Abhängigkeit des bewerteten Zustands ausgegeben wird, ist dadurch gekennzeichnet, dass zumindest eine Betriebszeit des Solarkollektors in einem in einem festlegbaren, für das Solarfluid kritischen Temperaturbereich erfasst wird. Anhand der Betriebszeit in dem festlegbaren, kritischen Temperaturbereich, vorzugsweise durch Aufsummieren von einzelnen Betriebszeiten zu einer Gesamtbetriebszeit, kann ein Zustand des Solarfluids abgeleitet, ermittelt und/oder bewertet werden. Dabei erfolgt vorteilhafterweise ein Vergleich mit mindestens einem festlegbaren Schwellwert für eine Betriebszeit, welche das Erreichen eines kritischen Solarfluidzustandes charakterisiert. Dieser Schwellwert ist vorzugsweise werksseitig vorgegeben und kann bei Bedarf vom Installateur oder Betreiber der Anlage variiert werden.

Entsprechend sieht die Erfindung vor, dass bei Erreichen eines kritischen Solarfluidzustandes und/oder nach Ablauf eines festlegbaren Zeitintervalls eine Wartungsmeldung ausgegeben wird.

Für das Solarfluid gibt es einen Temperaturbereich, in dem es besonders "gestresst" wird. Befindet sich das Solarfluid zu lange in diesem Temperaturbereich, so wird es für die Verwendung als Solarfluid unbrauchbar. Insbesondere ist ein Frostschutz dann nicht mehr gewährleistet. Um dies zu vermeiden, wird erfindungsgemäß der Zustand des Solarfluids ermittelt, überwacht und/oder bewertet und in Abhängigkeit von dem Zustand werden Wartungsmeldungen ausgegeben, um gegebenenfalls das Solarfluid auszuwechseln und damit die Standzeit des Solarkollektors zu erhöhen. Befindet sich das Solarfluid in einem zu langen Zeitraum im Stressbereich, so wird die Wartungsmeldung ausgelöst, sodass die Qualität des Fluids nachgeprüft werden kann.

Eine Ausführungsform der vorliegenden Erfindung sieht vor, dass das Zeitintervall von vorne gestartet wird, wenn bei einer Wartung das Solarfluid ausgewechselt wird. Noch eine weitere Ausführungsform der vorliegenden Erfindung sieht vor, dass das Zeitintervall nach einem Freigeben fortgesetzt wird, wenn bei einer Wartung das Solarfluid nicht ausgewechselt wird.

Zusätzlich sieht eine weitere Ausführungsform der vorliegenden Erfindung vor, dass wenn bei einer Wartung vor Zeitablauf des Zeitintervalls das Solarfluid nicht ausgewechselt wird und eine Freigabe durchgeführt wird, ein nachfolgender Zeitraum, in welchem das Solarfluid in einem kritischen Temperaturbereich betreibbar ist, für eine Wartungsmeldung verändert, insbesondere verkürzt wird. Die Zeiträume bis zu einer nachfolgenden Wartung werden somit von Wartungsmeldung zu Wartungsmeldung bis zu einem Ablauf des gesamten Zeitintervalls kürzer. Wird die Wartung des Solarfluids durchgeführt und das Fluid wird nicht ausgetauscht, da dessen Zustand für einen weiteren Betrieb geeignet ist, wird die Wartungsmeldung zurückgesetzt und ein weiteres, insbesondere zeitlich verkürztes Zeitfenster wird bis zur nächsten Wartung freigegeben. Wird das Fluid getauscht oder ausgewechselt, so wird ein Zähler zurückgesetzt, also ein Reset gemacht. Das Zeitintervall startet dann von vorne, das bedeutet, ein erstes Zeitfenster wird freigegeben. Der Solarregler beobachtet den Temperaturverlauf der Kollektortemperatur und summiert die Zeiten, in denen sich die Kollektortemperatur in dem "Stressbereich" des Solarfluids befindet.

Die erfindungsgemäße Vorrichtung zur optimierten Wartung eines Solarsystems mit Solarfluid in einem Kreislauf über mindestens einen Solarkollektor, insbesondere zur Verlängerung der Standzeit eines Solarkollektors, ist dadurch gekennzeichnet, dass Mittel zum Durchführen des erfindungsgemäßen Verfahrens vorgesehen sind. Insbesondere sieht eine Ausführungsform der vorliegenden Erfindung vor, dass die Mittel einen Solarregler umfassen, der ausgebildet ist, den Zeitraum zu erfassen, in welchem ein Solarfluid in einem für das Solarfluid kritischen Temperaturbereich betrieben wird. Der erfindungsgemäße Solarkollektor, der mit einem Solarfluid betreibbar ist, ist **dadurch gekennzeichnet, dass** der Solarkollektor eine erfindungsgemäße Vorrichtung umfasst.

Mit dem erfindungsgemäßen Verfahren und der erfindungsgemäßen Vorrichtung werden insbesondere die folgenden Vorteile realisiert:
Eine Wartungsmeldung wird abhängig von dem Zustand des Solarfluids ausgegeben und dadurch wird er an eine Anlage angepasste, optimale Wartungszeitpunkt relativ genau bestimmt. Ein Wartungsintervall wird in entsprechende kürzere Zeiträume oder Zeitfenster unterteilt. Weitere Zeitfenster werden nur nach Freigabe oder einem Reset durchlaufen. Nur bei einem Wechsel des Solarfluids wird das Zeitintervall von Beginn durchlaufen. Durch die verbesserte Überwachung des Solarfluids wird die Standzeit des Solarkollektors verlängert und die optimale Funktion eines Solarsystems sichergestellt, da mögliche Schäden durch ein nicht geeignetes oder in seinen Eigenschaften verändertes Solarfluid, beispielsweise mit eingeschränkten Frostschutzeigenschaften, verhindert oder zumindest deutlich verringert werden.

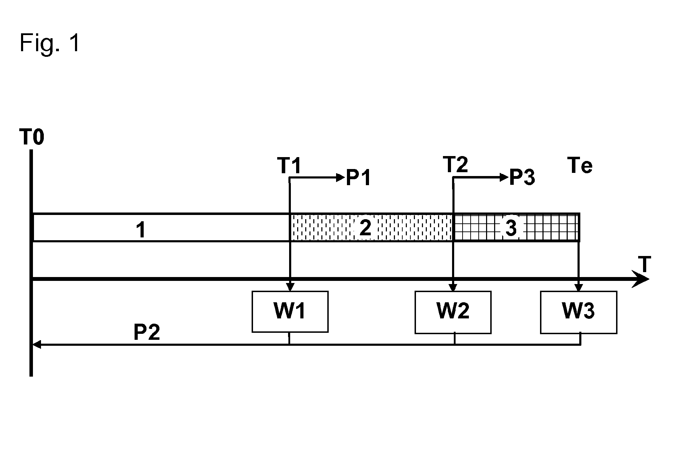

Die Zeichnung stellt ein Ausführungsbeispiel der Erfindung dar und zeigt in der einzigen Figur schematisch ein Zeitintervall für eine Wartung eines Solarkollektors und insbesondere eines Solarsystems.

Entlang einer Zeitschiene T ist das Zeitintervall von T0 bis Te aufgetragen. Das Zeitintervall ist in drei Zeiträume oder Zeitfenster 1 bis 3 unterteilt. Die Zeitfenster 1 bis 3 sind sequenziell angeordnet. Das Zeitfenster 1 läuft von T0 bis T1. Das Zeitfenster 2 läuft von T1 bis T2. Das Zeitfenster 3 läuft von T2 bis Te. Die Zeitfenster 1 bis 3 weisen eine unterschiedliche lange Zeitdauer auf, wobei das Zeitfenster 1 die längste Zeitdauer aufweist, und die nachfolgenden Zeitfenster 2 und 3 immer kürzer werdende Zeitdauern aufweisen. Der Zeitpunkt T0 kennzeichnet den Zeitpunkt zu Beginn des Verfahrens, also die Inbetriebnahme eines Solarkollektors mit einem neuen, ordnungsgemäßen Solarfluid, welches erstmalig in der Solaranlage eingesetzt wird. Entweder nach einem Zeitablauf bei T1 oder nach einer Wartungsmeldung aufgrund eines entsprechenden Zustands des Solarfluids, das heißt nach einem ersten kritischen Zeitbereich, in dem das Solarfluid ausreichend lang in einem kritischen Temperaturbereich betrieben wurde, hier durch T1 gekennzeichnet, wird aufgrund einer Wartungsmeldung eine erste Wartung W1 durchgeführt. Für das Auslösen der Wartungsmeldung können entweder fest vorgegebene Intervalle, bedarfsgerecht eingegebene Intervalle oder eine Kombination von beiden Berücksichtigung finden.

Die erste Wartung W1 kann nun ergeben, dass der Zustand des Solarfluids noch für einen weiteren Betrieb ausreicht oder ein Wechsel des Fluids erforderlich ist. Wenn das Solarfluid für einen weiteren Betrieb geeignet ist, wird ein Zähler zurückgesetzt und ein weiterer Betrieb für ein zweites Zeitfenster 2 freigegeben, wie durch den Pfeil P1 dargestellt. Es wird das zweite Zeitfenster 2 durchlaufen. Sollte das Fluid ausgewechselt werden müssen, so wird das Verfahren von dem Zeitpunkt T0 aus erneut gestartet und das Verfahren beginnt von vorne, wie durch den Pfeil P2 gekennzeichnet.

Nach Zeitablauf des zweiten Zeitfensters bei T2 oder nach einer erneuten Wartungsmeldung aufgrund eines entsprechenden Zustands des Solarfluids, das heißt nach einem zweiten kritischen Zeitbereich, in dem das Solarfluid ausreichend lang in einem kritischen Temperaturbereich betrieben wurde, hier durch T2 gekennzeichnet, wird aufgrund einer Wartungsmeldung eine zweite Wartung W2 durchgeführt. Die zweite Wartung W2 kann analog zur Wartung W1 ergeben, dass der Zustand des Solarfluids noch für einen weiteren Betrieb ausreicht oder ein Wechsel des Fluids erforderlich ist. Wenn das Solarfluid für einen weiteren Betrieb geeignet ist, wird ein Zähler zurückgesetzt und ein weiterer Betrieb für das nachfolgende, dritte Zeitfenster 3 freigegeben, wie durch den Pfeil P3 dargestellt. Es wird das dritte Zeitfenster 3 durchlaufen. Sollte das Fluid ausgewechselt werden müssen, so wird das Verfahren von dem Zeitpunkt T0 erneut gestartet und das Verfahren beginnt von vorne, wie durch den Pfeil P2 gekennzeichnet. Die Schritte können beliebig wiederholt werden mit einer beliebigen Anzahl von Zeitfenstern. In der Figur ist ein letztes, drittes Zeitfenster 3 dargestellt.

Nach Zeitablauf des dritten und letzen Zeitfensters bei Te oder nach einer erneuten Wartungsmeldung aufgrund eines entsprechenden Zustands des Solarfluids, das heißt nach einem dritten kritischen Zeitbereich, in dem das Solarfluid ausreichend lang in einem kritischen Temperaturbereich betrieben wurde, hier durch Te gekennzeichnet, wird aufgrund einer Wartungsmeldung eine dritte Wartung W3 durchgeführt. Die dritte Wartung W3 kann analog zur Wartung W1 und W2 ergeben, dass der Zustand des Solarfluids noch für einen weiteren Betrieb ausreicht oder ein Wechsel des Fluids erforderlich ist. Da das Zeitfenster 3 das letzte Zeitfenster in dem Zeitintervall ist, wird, obwohl das Solarfluid für einen weiteren Betrieb geeignet sein kann, aus Sicherheitsgründen ein weiterer Betrieb mit dem gleichen Solarfluid verhindert und kein nachfolgendes Zeitfenster freigegeben. Es kann bei einem erneuten Beginn des Verfahrens eine entsprechende Korrektur hinsichtlich des Zeitintervalls hin zu längeren oder kürzeren Zeitintervallen erfolgen, wenn das Solarfluid entsprechend vor Ablauf, bei Ablauf oder erst nach Ablauf entsorgt werden muss. Das Fluid wird bei Te ausgewechselt und das Verfahren wird von dem Zeitpunkt T0 erneut gestartet, wie durch den Pfeil P2 gekennzeichnet.

## Patentansprüche

1. Verfahren zur optimierten Wartung eines Solarsystems mit Solarfluid in einem Kreislauf über mindestens einen Solarkollektor, insbesondere zur Verlängerung der Standzeit eines Solarkollektors, wobei ein Zustand eines Solarfluids bewertet wird und eine Wartungsmeldung in Abhängigkeit des bewerteten Zustands ausgegeben wird,
**dadurch gekennzeichnet, dass** zumindest eine Betriebszeit des Solarkollektors in einem für das Solarfluid kritischen Temperaturbereich erfasst wird, dass anhand der Betriebszeit des Solarfluids in einem festlegbaren, für das Solarfluid kritischen Temperaturbereich der Zustand des Solarfluids bewertet wird, **dass** die Betriebszeiten des Solarfluids in einem festlegbaren, für das Solarfluid kritischen Temperaturbereich aufsummiert und mit mindestens einem festlegbaren Schwellwert für eine Betriebszeit, welche das Erreichen eines kritischen Solarfluidzustandes charakterisiert, verglichen werden, und dass bei Erreichen eines kritischen Solarfluidzustandes und/oder nach Ablauf eines festlegbaren Zeitintervalls eine Wartungsmeldung ausgegeben wird.

2. Verfahren nach Anspruch 1,
**dadurch gekennzeichnet, dass** das Zeitintervall von vorne gestartet wird, wenn bei einer Wartung das Solarfluid ausgewechselt wird.

3. Verfahren nach Anspruch 1 oder 2,
**dadurch gekennzeichnet, dass** das Zeitintervall nach einem Freigeben fortgesetzt wird, wenn bei einer Wartung das Solarfluid nicht ausgewechselt wird.

4. Verfahren nach einem der Ansprüche 1 bis 3,
**dadurch gekennzeichnet, dass** wenn bei einer Wartung vor Zeitablauf des Zeitintervalls das Solarfluid nicht ausgewechselt wird und eine Freigabe durchgeführt wird, ein nachfolgender Zeitraum, in welchem das Solarfluid in einem kritischen Temperaturbereich betreibbar ist, für eine Wartungsmeldung verändert, insbesondere verkürzt wird.

5. Vorrichtung zur optimierten Wartung eines Solarsystems mit Solarfluid in einem Kreislauf über mindestens einen Solarkollektor, insbesondere zur Verlängerung der Standzeit eines Solarkollektors,
**dadurch gekennzeichnet, dass** Mittel zum Durchführen des Verfahrens nach einem der Ansprüche 1 bis 4 vorgesehen sind.

6. Vorrichtung nach Anspruch 5,
**dadurch gekennzeichnet, dass** die Mittel einen Solarregler umfassen, der ausgebildet ist, den Zeitraum zu erfassen, in welchem ein Solarfluid in einem für das Solarfluid kritischen Temperaturbereich betrieben wird.

7. Solarkollektor, der mit einem Solarfluid betreibbar ist,
**dadurch gekennzeichnet, dass** der Solarkollektor eine Vorrichtung nach Anspruch 5 oder 6 umfasst.

## Claims

1. Method for the optimized servicing of a solar system with solar fluid in a circuit by means of at least one solar collector, in particular for extending the lifetime of a solar collector, a state of a solar fluid being assessed and, depending on the state assessed, a servicing message being issued, **characterized in that** at least one operating time of the solar collector in a temperature range that is critical for the solar fluid is recorded, **in that** the state of the solar fluid is assessed on the basis of the operating time of the solar fluid in a temperature range that is critical for the solar fluid and can be fixed, **in that** the operating times of the solar fluid in a temperature range that is critical for the solar fluid and can be fixed are added up and compared with at least one threshold value that can be fixed for an operating time which characterizes the reaching of a critical solar fluid state, and **in that** a servicing message is issued when a critical solar fluid state is reached and/or after a time interval that can be fixed has elapsed.

2. Method according to Claim 1, **characterized in that** the time interval is started from the beginning if the solar fluid is changed in a servicing procedure.

3. Method according to Claim 1 or 2, **characterized in that** the time interval after an authorization is continued if the solar fluid is not changed during a servicing procedure.

4. Method according to one of Claims 1 to 3, **characterized in that**, if the solar fluid is not changed in a servicing procedure before the elapse of the time interval and an authorization is implemented, a subsequent time period in which the solar fluid can be operated in a critical temperature range for a servicing message is changed, in particular is shortened.

5. Device for the optimized servicing of a solar system with solar fluid in a circuit by means of at least one solar collector, in particular for extending the lifetime of a solar collector, **characterized in that** means for carrying out the method according to one of Claims 1 to 4 are provided.

6. Device according to Claim 5, **characterized in that** the means comprise a solar controller, which is designed to record the time period in which a solar fluid is operated in a temperature range that is critical for the solar fluid.

7. Solar collector which can be operated with a solar fluid, **characterized in that** the solar collector comprises a device according to Claim 5 or 6.

## Revendications

1. Procédé d'optimisation de l'entretien d'un système solaire comprenant un fluide solaire dans un circuit par le biais d'au moins un collecteur solaire, en particulier pour prolonger la durée de vie d'un collecteur solaire, un état d'un fluide solaire étant évalué et un message d'entretien étant délivré en fonction de l'état évalué, **caractérisé en ce qu'**au moins une durée de fonctionnement du collecteur solaire dans une plage de températures critique pour le fluide solaire est détectée, **en ce que** l'état du fluide solaire est évalué à l'aide de la durée de fonctionnement du fluide solaire dans une plage de températures pouvant être déterminée et critique pour le fluide solaire, **en ce que** les durées de fonctionnement du fluide solaire dans une plage de températures pouvant être déterminée et critique pour le fluide solaire sont additionnées et sont comparées à au moins une valeur seuil pouvant être déterminée pour une durée de fonctionnement qui caractérise l'atteinte d'un état de fluide solaire critique, et **en ce qu'**un message d'entretien est délivré lorsqu'un état de fluide solaire critique est atteint et/ou après le déroulement d'un intervalle de temps pouvant être déterminé.

2. Procédé selon la revendication 1,
**caractérisé en ce que** l'intervalle de temps est commencé depuis le début si le fluide solaire est remplacé lors d'un entretien.

3. Procédé selon la revendication 1 ou 2,
**caractérisé en ce que** l'intervalle de temps est poursuivi après une autorisation si le fluide solaire n'est pas remplacé lors d'un entretien.

4. Procédé selon l'une quelconque des revendications 1 à 3,
**caractérisé en ce que**, si le fluide solaire n'est pas remplacé et une autorisation est effectuée lors d'un entretien avant le déroulement dans le temps de l'intervalle de temps, une période de temps suivante, pendant laquelle le fluide solaire peut fonctionner dans une plage de températures critique, est modifiée pour un message d'entretien, en particulier est raccourcie.

5. Dispositif d'optimisation de l'entretien d'un système solaire comprenant un fluide solaire dans un circuit par le biais d'au moins un collecteur solaire, en particulier pour prolonger la durée de vie d'un collecteur solaire,
**caractérisé en ce que** des moyens pour mettre en oeuvre le procédé selon l'une quelconque des revendications 1 à 4 sont prévus.

6. Dispositif selon la revendication 5,
**caractérisé en ce que** les moyens comportent un régulateur solaire qui est conçu pour détecter la période de temps pendant laquelle un fluide solaire fonctionne dans une plage de températures critique pour le fluide solaire.

7. Collecteur solaire, lequel peut fonctionner avec un fluide solaire,
**caractérisé en ce que** le collecteur solaire comporte un dispositif selon la revendication 5 ou 6.
